# EUROPEAN PATENT SPECIFICATION

(11) **EP 3 065 881 B1**
(45) Date of publication and mention of the grant of the patent: **08.01.2020**
(21) Application number: 14809668.8
(22) Date of filing: 04.11.2014
(51) Int. Cl.: B05B 12/24

(54) **MASKING TAPE**
ABDECKKLEBEBAND
RUBAN DE MASQUAGE

(30) Priority: 04.11.2013 GB 201319408
(43) Date of publication of application: 14.09.2016
(73) Proprietor: JTape Ltd, Macclesfield, Cheshire SK10 2SF (GB)
(72) Inventor: JEVONS, Oliver, Macclesfield Cheshire SK10 2SF (GB)
(74) Representative: TLIP Limited
(86) International application number: PCT/GB2014/053284
(87) International publication number: WO 2015/063525

(56) References cited:
- WO-A1-2006/109093
- GB-A- 2 461 805
- GB-A- 2 495 333
- US-B1- 6 596 376

## Description

This invention relates to masking tapes, more particularly masking tapes for the automotive refinishing trade.

Foam masking tape are known primarily intended to fit between doors and door surrounds to stop ingress of paint spray to the vehicle interior. A typical such tape is 3M's Soft Edge Tape, which comprises an essentially circular section foam tape with an adhesive stripe. The tape is applied to all around the door surround with the door open, attached by the adhesive stripe. The door is then closed on the tape which forms a seal and absorbs excess paint. See as example GB2461805.

This tape is sometimes used for masking along panel swage lines when blending new paint with existing paintwork, for which purpose, however, it is not entirely suitable.

WO2006/109093 discloses a masking tape comprising a paper masking tape with a foam strip, wider than the paper tape, adhered to the edges of the adhesive face of the paper tape and passed around the other face.

The present invention provides a tape better adapted to blending along swage lines, and which is also suitable for numerous other masking jobs. An automotive refinishing trade masking product adapted for blending paint along swage lines is the first aspect of the present invention and is provided in claim 1. A second aspect of the present invention is an automotive refinishing trade masking method provided in claim 5. Preferred embodiments are provided in the dependent claims. Any embodiments of the disclosure below which are not encompassed by the claims are provided for reference only.

The invention comprises an automotive refinishing trade masking product adapted for blending paint along swage lines, consisting of a foam tape (11) having a flat cross section with rounded edges (12) an edgewise bead (17) adapted to be removed from the tape (11), wherein on one face (11a) of the foam tape is a single adhesive stripe (13) covering substantially all of the face (11a) except for between 2 and 3 mm either side, characterised in that the tape is between 4 and 6 mm think and between 12 and 17 mm wide, whereby it is capable of taking on and maintaining a curvature, when adhered by its adhesive stripe to a surface, on a radius of 160 mm without kinking or buckling.

The tape may be between 4 and 6 mm thick and between 12 and 17 mm wide.

WO2006/109093 discloses, in one embodiment, a masking tape comprising a foam strip with an adhesive face, but which has different dimensions.

The rounded edges may be substantially semi-circular in cross section.

The slight overhang provided by the rounded edge partially shields the panel beneath it, some paint being carried in by turbulence.

Setting back the adhesive from the edge avoids a hard paint edge forming, as the paint does not reach the adhesive edge, being absorbed by the foam.

The tape may be made from a sheet of foam by making a cold-weld seam as described in EP0384626.

The tape has an edgewise bead adapted to be removed from the tape after a first coat e.g. of primer has been applied, without needing to disturb the attachment of the tape to the panel, whereby a top coat can be applied to cover the edge of the primer. The edgewise bead can be formed by making a cold weld seam which is easily removable, as described in GB2495333. The cold weld seam may be effected by a notched roller that can substantially separate the bead from the seam but which leaves it more firmly attached at 'hesitation' points at intervals, say every 100 mm.

The invention also comprises an automotive refinishing trade masking method adapted for blending paint being applied to a panel with an area of existing paintwork along an edge thereof, characterised by comprising applying to the existing paintwork, along the edge, a masking product consisting of a foam tape having a flat cross-section with rounded edges, a removable edgewise bead (17)wherein on one face of the foam tape is a single adhesive stripe covering substantially all of the face except for between 2 and 3 mm either side, using the adhesive to attach the tape to the panel, and locating the tape such that the edge of the existing paintwork lies beneath a rounded edge of the tape, wherein the removable edgewise bead (17) can be removed after a first coat of paint has been applied, leaving the rest of the tape (11) in place for a second coat of paint to be applied..

The overhanging edge of the tape 'feathers' the spray such that its thickness tapers off towards the edge whereby to blend the new and existing paintwork to leave no visible join and no hard paint edge.

In practice, panels are usually painted up to a swage line, which may be a curved or flat fold swage line, and whether salient or inverted. It is relatively easy to apply the tape smoothly along such a line, but it is important that, with curved swage lines, the tape is applied smoothly and without kinking or buckling, that would leave small regions of tape lifted off the surface to allow paint to penetrate unevenly.

The invention also comprises a method of masking to blend successive coats of paint being applied to a panel with an area of existing paintwork along an edge thereof, comprising applying to the existing paintwork, along the edge, a foam tape having a flat cross-section with rounded edges and, on one face, a single adhesive stripe covering substantially all of the face except for between 2 and 3 mm either side, using the adhesive to attach the tape to the panel, and locating the tape such that the edge of the existing paintwork lies beneath the rounded edge of the tape in which the tape has a removable bead, a first coat being applied with the bead attached, the bead then being detached, and the second coat applied.

The tape can be used around wheel arches, screen gaskets and rubbers, bumper flutes, alloy wheel rims, narrow panel-gap apertures with door seals, and rim edges around filler caps, in the same way as along swage lines.

Embodiments of masking tape and a method of masking according to the invention will now be described with reference to the accompanying drawings, in which:
- Figure 1: is a cross section through a first embodiment of tape applied to a surface;
- Figure 2: is a face-on view of the tape of Figure 1 applied curved to a surface;
- Figure 3: is a face-on view of the tape of Figure 1 applied along a swage line of a panel;
- Figure 4: is a cross section on line IV - IV of Figure 3:
- Figure 5: is a cross section like Figure 1 through a second embodiment of tape.

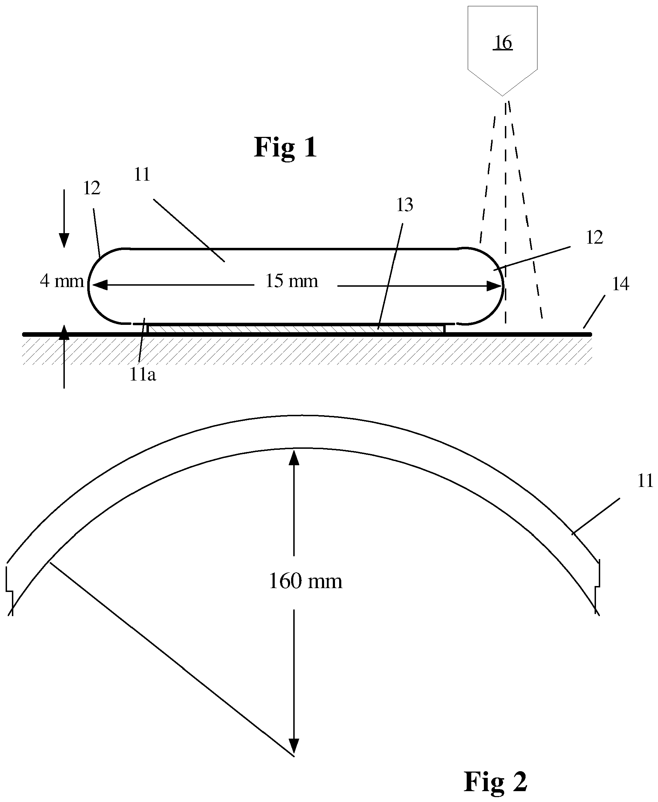

The drawings illustrate comprises a foam tape 11 having a flat cross-section with rounded edges 12 and, on one face, 11a, an adhesive stripe 13 covering substantially all of the face 11a except for between 2 and 3 mm either side, and being capable of taking on and maintaining a curvature, when adhered by its adhesive 13 to a surface 14, on a radius of 160 mm without kinking, as particularly seen in Figure 2.

The tape 11 is 4 mm thick and 15 mm wide.

The rounded edges 12 are substantially semi-circular in cross section.

The slight overhang provided by the rounded edge 12 partially shields the panel 14 beneath it, some paint being carried in by turbulence. It is, of course, only necessary for one edge of the tape 11 to perform this shielding function, but it is convenient to have both edges the same so that orientation of the tape is immaterial.

If the tape 11 is made by a method as described in EP0384626, both edges 12 will be essentially rounded so as to perform the shielding function.

Setting back the adhesive 13 from the edge 12 avoids a hard paint edge forming, as the paint does not reach the adhesive 13 edge, being absorbed by the foam.

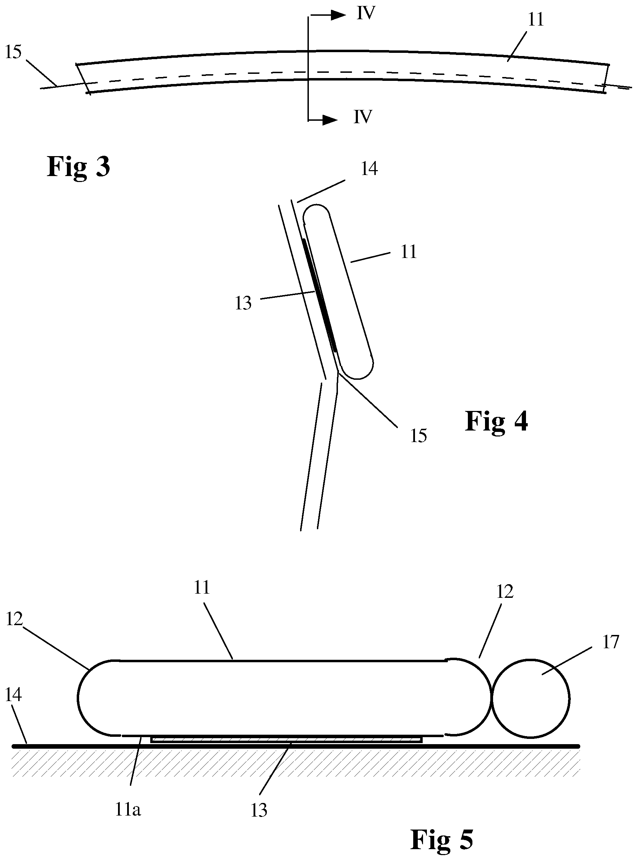

Figures 1 and 2 show the tape 11 applied to a flat surface 14. However, it is particularly beneficial when painting up to a swage line 15, as illustrated in Figures 3 and 4. Many swage lines are curved, some quite markedly, and the tape 11 can conform to essentially all swage line curvatures without kinking or buckling, and without putting so much tension on the adhesive as to detach it from the surface.

In use, and particularly as seen in Figure 1, paint from a spray gun 16 is partially shielded beneath the rounded edge 12, some paint being carried beneath the edge 12 by turbulence induced in the spray by the edge 12 itself. The thickness of the paint thus tapers at the edge, leaving no hard paint edge that would need to be rubbed down.

Figure 5 shows a second tape embodiment in which at one edge 12 there is a removable bead 17, also, of course, having a rounded edge. This is useful when applying two coats of paint in succession, a primer, say, then a lacquer. The primer is applied with the bead 17 in place. The bead is then removed, leaving the rest of the tape 11 in place. Now, the lacquer can be applied over the primer, and it will cover the edge of the primer but again be feathered so as to taper in thickness.

A foam tape having a flat cross-section with rounded edges an edgewise bead (17) adapted to be removed from the tape (11), and, on one face, an adhesive stripe covering substantially all of the face except for between 2 and 3 mm either side, and being capable of taking on and maintaining a curvature, when adhered by its adhesive to a surface, on a radius of 160 mm without kinking.

The tape may be between 4 and 6 mm thick and between 12 and 17 mm wide.

The rounded edges may be substantially semi-circular in cross section.

The slight overhang provided by the rounded edge partially shields the panel beneath it, some paint being carried in by turbulence.

Setting back the adhesive from the edge avoids a hard paint edge forming, as the paint does not reach the adhesive edge, being absorbed by the foam.

The tape may be made from a sheet of foam by making a cold-weld seam as described in EP0384626.

The tape has an edgewise bead adapted to be removed from the tape after a first coat e.g. of primer has been applied, without needing to disturb the attachment of the tape to the panel, whereby a top coat can be applied to cover the edge of the primer. The edgewise bead can be formed by making a cold weld seam which is easily removable, as described in GB2495333.

The invention also comprises a method of masking to blend paint being applied to a panel with an area of existing paintwork along an edge thereof, comprising applying to the existing paintwork, along the edge, a foam tape having a flat cross-section with rounded edges an edgewise bead (17) adapted to be removed from the tape (11), and, on one face, a single adhesive stripe covering substantially all of the face except for between 2 and 3 mm either side, using the adhesive to attach the tape to the panel, and locating the tape such that the edge of the existing paintwork lies beneath the rounded edge of the tape.

The overhanging edge of the tape 'feathers' the spray such that its thickness tapers off towards the edge whereby to blend the new and existing paintwork to leave no visible join and no hard paint edge.

In practice, panels are usually painted up to a swage line, which may be a curved or flat fold swage line, and whether salient or inverted. It is relatively easy to apply the tape smoothly along such a line, but it is important that, with curved swage lines, the tape is applied smoothly and without kinking or buckling, that would leave small regions of tape lifted off the surface to allow paint to penetrate unevenly.

The invention also comprises a method of masking to blend successive coats of paint being applied to a panel with an area of existing paintwork along an edge thereof, comprising applying to the existing paintwork, along the edge, a foam tape having a flat cross-section with rounded edges and, on one face, a single adhesive stripe covering substantially all of the face except for between 2 and 3 mm either side, using the adhesive to attach the tape to the panel, and locating the tape such that the edge of the existing paintwork lies beneath the rounded edge of the tape in which the tape has a removable bead, a first coat being applied with the bead attached, the bead then being detached, and the second coat applied.

## Claims

1. An automotive refinishing trade masking product adapted for blending paint along swage lines, consisting of a foam tape (11), having a flat cross section with rounded edges (12), an edgewise bead (17) adapted to be removed from the tape (11, **characterized in that** on one face (11a) of the foam tape is a single adhesive stripe (13) covering substantially all of the face (11a) except for between 2 and 3 mm either side, wherein the tape is between 4 and 6 mm thick and between 12 and 17 mm wide, whereby it is capable of taking on and maintaining a curvature, when adhered by its adhesive stripe to a surface, on a radius of 160 mm without kinking or buckling whilst providing that an overhanging edge (12) of the tape can feather a paint spray such that the thickness of the spray tapers off towards an edge of an existing paintwork whereby to blend new and existing paintwork to leave no visible join and no hard paint edge.

2. A masking product according to claim 1, of which the rounded edges (12) are substantially semi-circular in cross section, defined as cold weld seam edges.

3. A masking product according to claim 1 or claim 2, in which the edgewise bead (17) is attached to the tape (11) by a cold weld seam.

4. A masking product according to claim 3, in which the cold weld seam has intermittent hesitation points at which it is more firmly attached to the tape.

5. An automotive refinishing trade masking method adapted for blending paint being applied to a panel (14) with an area of existing paintwork along an edge thereof, **characterised by** comprising applying to the existing paintwork, along the edge, a masking product consisting of a foam tape (11) having a flat cross-section with rounded edges (12), a removable edgewise bead (17)wherein on one face (11a) of the foam tape is a single adhesive stripe (13) covering substantially all of the face (11a) except for between 2 and 3 mm either side, using the adhesive to attach the tape (11) to the panel (14), and locating the tape (11) such that the edge of the existing paintwork lies beneath a rounded edge (12) of the tape whereby an overhanging edge (12) can feather a paint spray such that the thickness of the spray tapers off towards the edge of the existing paintwork whereby to blend the new and existing paintwork to leave no visible join and no hard paint edge, wherein the removable edgewise bead (17) can be removed after a first coat of paint has been applied, leaving the rest of the tape (11) in place for a second coat of paint to be applied.

6. A method according to claim 5, in which a panel (14) is painted up to a swage line (15).

## Patentansprüche

1. Abdeckprodukt für die Automobilaufbereitungsbranche, das angepasst ist, um Farbe entlang Gesenklinien zu mischen, bestehend aus einem Schaumstoffband (11) mit einem flachen Querschnitt mit abgerundeten Kanten (12), einer Kantenwulst (17), die angepasst ist, um vom Band (11) entfernt zu werden, **dadurch gekennzeichnet, dass**
sich auf einer Fläche (11a) des Schaumstoffbands ein einzelner Klebestreifen (13) befindet, der im Wesentlichen die gesamte Fläche (11a), ausgenommen zwischen 2 und 3 mm auf jeder Seite, abdeckt, wobei das Band zwischen 4 und 6 mm dick und zwischen 12 und 17 mm breit ist, wodurch es in der Lage ist, wenn es durch seinen Klebestreifen auf eine Oberfläche geklebt wird, eine Krümmung mit einem Radius von 160 mm ohne Knicken oder Beulen einzunehmen und zu halten, während vorgesehen ist, dass eine überhängende Kante (12) des Bands eine Farbsprühung so verteilen kann, dass sich die Dicke der Sprühung zu einer Kante einer bestehenden Malerarbeit verjüngt, um neue und bestehende Malerarbeit zu mischen, um keine sichtbare Fuge und keine harte Farbkante zu hinterlassen.

2. Abdeckprodukt nach Anspruch 1, von dem die abgerundeten Kanten (12) im Wesentlichen einen halbkreisförmigen Querschnitt haben, die als Kaltschweißnahtkanten definiert sind.

3. Abdeckprodukt nach Anspruch 1 oder Anspruch 2, wobei die Kantenwulst (17) durch eine Kaltschweißnaht an das Band (11) angebracht ist.

4. Abdeckprodukt nach Anspruch 3, wobei die Kaltschweißnaht intermittierende Verzögerungspunkte aufweist, an denen sie fester an das Band befestigt ist.

5. Abdeckverfahren für die Automobilaufbereitungsbranche, das angepasst ist, um auf eine Platte (14) aufgetragene Farbe mit einem Bereich bestehender Malerarbeiten entlang einer Kante davon zu mischen, **dadurch gekennzeichnet, dass** es ein Anbringen auf die bestehende Malerarbeit, entlang der Kante, eines Abdeckbands, bestehend aus einem Schaumstoffband (11) mit einem flachen Querschnitt mit abgerundeten Kanten (12), einer entfernbaren Kantenwulst (17), wobei sich auf einer Fläche (11a) des Schaumstoffbands ein einzelner Klebestreifen (13) befindet, der im Wesentlichen die gesamte Fläche (11a), ausgenommen zwischen 2 und 3 mm auf jeder Seite, abdeckt, ein Verwenden des Klebers, um das Band (11) an die Platte (14) anzubringen und ein Lokalisieren des Bands (11), so dass die Kante der bestehenden Malerarbeit unter einer abgerundeten Kante (12) des Bands liegt, umfasst, wodurch eine überhängende Kante (12) eine Farbsprühung so verteilen kann, dass sich die Dicke der Sprühung zur Kante der bestehenden Malerarbeit verjüngt, wodurch die neue und die bestehende Malerarbeit vermischt wird, um keine sichtbare Fuge und keine harte Farbkante zu hinterlassen, wobei die entfernbare Kantenwulst (17) nach dem Auftragen einer ersten Farbschicht entfernt werden kann, wobei das übrige Band (11) für eine zweite aufzutragende Farbschicht in Position bleibt.

6. Verfahren nach Anspruch 5, wobei eine Platte (14) bis zu einer Gesenklinie (15) angestrichen wird.

## Revendications

1. Produit de masquage pour le secteur de la finition automobile adapté pour le mélange de peinture le long de lignes de démarcation, constitué d'un ruban en mousse (11) possédant une section transversale plate avec des bords arrondis (12), un bourrelet en bordure (17) adapté pour être retiré du ruban (11) **caractérisé en ce que**
sur une face (11a) du ruban en mousse, une seule bande adhésive (13) est présente recouvrant sensiblement toute la face (11a), à l'exception de 2 à 3 mm de chaque côté, ledit ruban possédant une épaisseur comprise entre 4 et 6 mm et une largeur comprise entre 12 et 17 mm, grâce à quoi il peut prendre et conserver une courbure lorsqu'il adhère au moyen de sa bande adhésive sur une surface, sur un rayon de 160 mm sans se vriller ni se déformer, tout en permettant qu'un bord en porte-à-faux (12) du ruban puisse faire pénétrer une pulvérisation de peinture de sorte que l'épaisseur du spray rétrécisse en allant vers un bord d'une peinture existante, ce qui permet de mélanger les peintures neuves et existantes sans laisser de joint visible ni de bord de peinture dur.

2. Produit de masquage selon la revendication 1, lesdits bords arrondis (12) étant selon leurs coupes transversales sensiblement semi-circulaire, définis sous forme de bords de joint de soudure à froid.

3. Produit de masquage selon la revendication 1 ou 2, ledit bourrelet en bordure (17) étant fixé au ruban (11) par un joint de soudure à froid.

4. Produit de masquage selon la revendication 3, ledit joint de soudure à froid possédant des points d'hésitation intermittents au niveau desquels il est plus fermement attaché au ruban.

5. Procédé de masquage pour le secteur de la finition automobile adapté pour le mélange de peinture appliqué sur un panneau (14) avec une zone de peinture existante le long d'un bord de celui-ci, **caractérisé en ce qu'**il comprend l'application à la peinture existante, le long du bord, d'un produit de masquage constitué d'un ruban en mousse (11) possédant une section transversale plate avec des bords arrondis (12), un bourrelet en bordure amovible (17) sur une face (11a) du ruban en mousse une seule bande adhésive (13) étant présente recouvrant sensiblement l'ensemble de la face (11a) sauf de 2 à 3 mm de chaque côté, utilisant l'adhésif pour fixer le ruban (11) au panneau (14) et positionnant le ruban (11) de sorte que le bord de la peinture existante se trouve en-dessous d'un bord arrondi (12) du ruban grâce à quoi un bord en porte-à-faux (12) peut faire pénétrer une pulvérisation de peinture de sorte que l'épaisseur de la pulvérisation rétrécisse en allant vers le bord de la peinture existante, ce qui permet de mélanger la peinture nouvelle et existante sans laisser de joint visible ni de bord de peinture dur, ledit bourrelet en bordure amovible (17) pouvant être retiré après l'application d'une première couche de peinture, laissant le reste du ruban (11) en place pour l'application d'une seconde couche de peinture.

6. Procédé selon la revendication 5, un panneau (14) étant peint jusqu'à une ligne de démarcation (15).
